(19) Europäisches Patentamt / European Patent Office / Office européen des brevets

(11) **EP 4 236 256 B1**

(12) **EUROPÄISCHE PATENTSCHRIFT**

(45) Veröffentlichungstag und Bekanntmachung des Hinweises auf die Patenterteilung:
**28.01.2026 Patentblatt 2026/05**

(21) Anmeldenummer: **22198218.4**

(22) Anmeldetag: **27.09.2022**

(51) Internationale Patentklassifikation (IPC):
**H04L 47/36** *(2022.01)* **H04L 49/354** *(2022.01)*
**H04L 49/20** *(2022.01)*

(52) Gemeinsame Patentklassifikation (CPC):
**H04L 47/365;** H04L 49/205; H04L 49/354;
H04W 4/48

(54) **INITIALISIEREN EINER SYSTEMANORDNUNG ZUM PAKETBASIERTEN ÜBERTRAGEN VON DATEN**

INITIALIZING A SYSTEM ARRANGEMENT FOR PACKET-BASED DATA TRANSFER

INITIALISATION D'UN SYSTEME DE TRANSMISSION DE DONNEES PAR PAQUETS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**30.08.2023 Patentblatt 2023/35**

(73) Patentinhaber: **INOVA Semiconductors GmbH**
**81379 München (DE)**

(72) Erfinder:
• **Neumann, Roland**
**83646 Bad Toelz (DE)**
• **Kluge, Fabian**
**94366 Perasdorf (DE)**

(74) Vertreter: **Reich, Jochen**
**Reich-ip**
**Herrnstraße 15**
**80539 München (DE)**

(56) Entgegenhaltungen:
**EP-B1- 1 993 237 US-B2- 9 043 509**

## Beschreibung

Die vorliegende Erfindung ist auf ein Verfahren zum Initialisieren einer Systemanordnung bzw. eines Datenkanals gerichtet, wobei paketbasierte Datenübertragungen derart optimiert werden, dass diese eine deterministische Latenzzeit aufweisen. Darüber hinaus wird sichergestellt, dass eine einzige physische Datenleitung Verwendung finden kann, obwohl 128 Leitungen zu implementieren sind. Aufgrund der paketbasierten Übertragung kann die Latenzzeit der Datenübertragung unabhängig von der Bandbreite des Übertragungskanals gesteuert werden. Somit wird eine deterministische Latenzzeit über einen einzigen physischen Kommunikationskanal erreicht, was wiederum gerade im Automobil vorteilhaft ist, da gerade in der E- Mobilität eine Gewichtseinsparung zur Erhöhung der Reichweite des Automobils notwendig ist. Die vorliegende Erfindung ist ebenfalls gerichtet auf eine entsprechend eingerichtete Systemanordnung sowie ein Computerprogrammprodukt und ein computerlesbares Medium mit Steuerbefehlen, welche das Verfahren implementieren bzw. die Systemanordnung betreiben.

Die Erfindung ist definiert durch die unabhängigen Ansprüche; weitere besondere Ausbildungsformen werden durch die abhängigen Ansprüche definiert.

US 9,043,509 B2 zeigt Netzwerkanpassungen in Abhängigkeit von Latenzvorgaben. EP 1 993 237 B1 zeigt eine Schaltung für den Einsatz in einem Multimedia-Server-Modul, das mit einer Vielzahl von Multimedia-Quellen kuppelbar ist, die mindestens ein Multimedia-Signal produzieren.

Eine paketbasierte Datenübertragung ist aus dem Stand der Technik bekannt, wobei jedoch die zugrunde liegende Hardware keinerlei Gewichtsbeschränkungen unterliegt. So sind netzwerktechnische Kopplungen bekannt, die über eine bestimmte Anzahl an Datenkabel bewerkstelligt werden. Hierbei ist jedoch das Gewicht typischerweise von untergeordneter Rolle und es werden redundante Datenleitungen bzw. Datenpfade in einem Computernetzwerk vorgeschlagen. Diese netzwerktechnischen Datenübertragungen mitsamt implizierter Topologie und Architektur sind jedoch im Automobil aufgrund der besonderen Anforderungen nicht einsetzbar.

Die Datenübertragungslösung für den Anwendungsfall im Auto muss maximale Effizienz (minimaler Overhead) hinsichtlich Bandbreitenausnutzung haben. Darüber hinaus muss es möglich sein viele (>100) Datenpfade parallel über ein physikalisches Medium (Glasfaser oder elektrisches Kabel) übertragen zu können. Dabei müssen die Datenpfade unabhängig voneinander sein.

Datenpfade mit niedriger Latenzzeit dürfen keine hohe Bandbreite benötigen, dies ist bei reinen Framebasierten oder TDM Systemen nicht möglich (niedrige Latenzzeit wird durch feste Zuweisung von Bandbreite erkauft).

Datenpfade müssen eine deterministische Latenzzeit haben. Deterministische Datenpfade sind bei Systemen mit möglichen Kollisionen auf dem physical layer bzw. bei Systemen mit flexiblen Daten Routing (Ethernet) nicht möglich.

Systeme mit ineffizienten Linecoding (z.B. 8B/10B = 25% Overhead) haben einen zu hohen Overhead für Datenübertragungen hoher Bitrate.

Variable (Daten) Paketlängen erfordern zu viel Overhead, um diese bei der Daten Rückgewinnung (aus dem seriellen Datenstrom) wieder zu erkennen.

Es besteht also ein Bedarf im Automobil ein Verfahren zu schaffen, welches ermöglicht mit geringem technischem Aufwand, sowohl auf Hardwareseite als auch auf Softwareseite, eine deterministische Latenzzeit zu erreichen und hierbei Parameter der Datenleitung zu berücksichtigen.

Demgemäß ist es eine Aufgabe der vorliegenden Erfindung ein Verfahren zum Initialisieren einer Systemanordnung, eines Kommunikationskanals beziehungsweise einer Datenübertragung vorzuschlagen, welches es ermöglicht, eine deterministische Latenzzeit zu erreichen und hierbei einen minimalen Aufwand zu verursachen. Ferner ist es eine Aufgabe der vorliegenden Erfindung eine entsprechend eingerichtete Systemanordnung vorzuschlagen sowie ein Computerprogrammprodukt und ein computerlesbares Medium mit Steuerbefehlen, welche das Verfahren implementieren bzw. die Systemanordnung betreiben.

Die Aufgabe wird gelöst mit den Merkmalen des Patentanspruchs 1. Weitere vorteilhafte Ausgestaltungen sind in den Unteransprüchen angegeben.

Demgemäß wird ein Verfahren zum Initialisieren einer Systemanordnung zum paketbasierten Übertragen von Daten auf bis zu 128 virtuellen Pfaden über einen physischen Datenkanal eines Automobils mit deterministischer Latenzzeit vorgeschlagen, aufweisend ein Auslesen einer bereitgestellten Latenzzeitvorgabe und einer Bandbreitenvorgabe des Datenkanals für jeweils alle virtuellen Datenpfade zur Übertragung einer zu übertragenden Bitfolge; und ein Einstellen einer Paketlänge für jeweils jeden der 128 Datenpfade unter Berücksichtigung von vier vordefinierten Paketlängen der Bitfolge, wobei die Paketlänge jeweils derart gewählt wird, dass bei kurzer Latenzzeitanforderung und niedriger verfügbarer Bandbreite kurze Paketlängen verwendet werden und bei langer Latenzzeitanforderung und hoher verfügbarer Bandbreite lange Paketlängen gewählt werden.

Erfindungsgemäß wird vorgeschlagen, eine Systemanordnung zu initialisieren bzw. einen Datenkanal zu initialisieren, um hierauf eine paketbasierte Datenübertragung durchzuführen. Während ein einzelner physischer Datenkanal vorgegeben wird, sind auf diesem bis zu 128 virtuelle Datenpfade möglich, die unterschiedliche Datenquellen mit Datensenken verbinden. Hierzu kann ein Identifikator eines virtuellen Pfads verwendet werden und/ oder es werden entsprechende Adressen verwendet. Initial ist der Datenkanal bzw. die Datenübertragung nicht notwendigerweise von gewissen Charakteristika gekennzeichnet, sondern vielmehr ist vorliegend irgendeine Bandbreite verfügbar und die Latenzzeiten sind nichtdeterministisch. Das vorliegende Verfahren berücksichtigt die bereitgestellte Bandbreite und stellt sicher, dass die Datenübertragungen bezüglich der Latenzzeit sodann deterministisch sind.

In einem vorbereitenden Verfahrensschritt erfolgt ein Auslesen einer bereitgestellten Latenzzeitvorgabe und/ oder einer Bandbreitenvorgabe des Datenkanals. Die Latenzzeitvorgabe kann aus einem Anwendungsszenario entstehen und insofern kann mittels eines Datenspeichers hinterlegt werden, welche Latenzzeit je Kanal erwartet wird. Darüber hinaus kann die Vorgabe durch den Datenkanal an sich beeinflusst werden, derart, dass hier nur Latenzzeiten in einem vorbestimmten Rahmen möglich sind. Darüber hinaus kann der Datenkanal eine bestimmte Bandbreite vorgeben, welche notwendig ist. Auch die Bandbreitenvorgabe kann aus einem Anwendungsszenario entstammen, derart, dass vorgegeben wird, wie viel Bandbreite benötigt wird. Die Latenzzeitvorgabe und/ oder die Bandbreitenvorgabe kann auch in Abhängigkeit der Anzahl der belegten virtuellen Datenpfade erfolgen, derart, dass die Datenpfade gewisse Systemparameter untereinander aufteilen.

Generell ist es nicht notwendig, dass die Latenzzeitvorgaben bzw. die Bandbreitenvorgaben für jeden virtuellen Datenpfad gleich sind. Das Auslesen der bereitgestellten Latenzzeitvorgabe und/ oder der Bandbreitenvorgabe kann für jeden virtuellen Datenpfad gesondert festgelegt werden, sodass diese Parameter je virtuellen Datenpfad variieren können. Das Auslesen der Latenzzeitvorgabe bzw. der Bandbreitenvorgabe kann auch derart erfolgen, dass der physische Datenkanal ausgemessen wird und eine entsprechende Vorgabe aus der Ausmessung resultiert. Dies kann auch kontinuierlich erfolgen bzw. in wiederholten Abständen, sodass es möglich ist, die Latenzzeitvorgabe bzw. die Bandbreitenvorgabe über die Zeit anzupassen.

Daraufhin erfolgt ein Einstellen einer Paketlänge für jeweils jeden der 128 virtuellen Datenpfade unter Berücksichtigung von vier vordefinierten Paketlängen der Bitfolge. Es wird also für jeden virtuellen Datenpfad eingestellt, wie lang die gewählte Paketlänge sein soll. Empirisch hat sich hierbei herausgestellt, dass genau vier vordefinierten Paketlängen besonders vorteilhaft sind. Dies ermöglicht es eine stark reduzierte Anzahl von Paketlängen zu berücksichtigen, nämlich genau vier, und ist dennoch ausreichend genug, um eine Abwägung zwischen bereitgestellten Latenzzeitvorgabe und Bandbreitenvorgabe durchzuführen.

Die Paketlänge wird jeweils derart gewählt, dass bei kurzer Latenzzeitanforderung und niedriger verfügbare Bandbreite kurze Paketlängen verwendet werden. Analog hierzu werden bei langer Latenzzeitanforderung und hoher verfügbare Bandbreite lange Paketlängen gewählt. Diesem Verfahrensschritt liegt die Idee zugrunde, dass kleinere bzw. kürzere Pakete schneller übermittelt werden können, und insofern werden diese bei kurzer Latenzzeitanforderung gewählt. Eine kurze Latenzzeitanforderungen entspricht einer numerisch geringen Latenzzeitanforderung; es sind also kurze Latenzzeiten gefordert. Generell wird bei einer niedrigen Latenzzeitanforderungen von einer kurzen Latenzzeitanforderungen gesprochen. Bei einer niedrigen Latenzzeitanforderung wird eine kurze Latenzzeit gefordert. Bei einer höheren oder längeren Latenzzeitanforderungen wird eine höhere Latenzzeit erwartet. Gemäß der verwendeten Terminologie führt also nicht eine niedrige Anforderung zu einer hohen Latenzzeit. Ebenso führt eine hohe Anforderung nicht zu einer niedrigen Latenzzeit.

Die Paketlänge bezieht sich zum Beispiel auf die Anzahl der verfügbaren Bit je Paket. Sind größere Bandbreiten verfügbar, so werden lange Paketlängen gewählt, da hier größere Datenmengen zu übertragen sind, die dann eben auch eine höhere Bandbreite benötigen. Die angeführten Parameter können noch durch weitere Parameter beeinflusst werden. So kann die Wahl der Paketlänge auch dadurch beeinflusst werden, wie viele Daten insgesamt zu übertragen sind. Bei größeren Datenmengen eignen sich größere Bandbreiten und daher eben auch längere Paketlängen.

Gemäß einem Aspekt der vorliegenden Erfindung erfolgt mittels einer Paketlängenerhöhung eine Reduzierung der Overhead- Datenmenge. Dies hat den Vorteil, dass auch ein sogenannter Überschuss an Daten bei einer Kodierung bestimmt werden kann und dass in Abhängigkeit der zu übertragenden Datenmenge auch die Paketlänge beeinflusst werden kann. Erhöht sich beispielsweise die zu übertragende Datenmenge so kann erfindungsgemäß eine höhere Paketlänge gewählt werden, als die die initial eingestellt wurde. Wird also erfindungsgemäß erkannt, dass der Überschuss zu hoch ist bzw. minimiert werden kann, wird die Paketlänge erhöht. Bei einer sogenannten Überschuss- Datenmenge handelt es sich um eine Datenmenge, die sich nicht direkt auf die Nutzdaten bezieht, sondern die Daten beschreibt, die zur Kodierung oder Datenübertragung notwendig sind. So kann beispielsweise die Optimierung einer Disparität der zu übertragenden Daten dazu führen, dass anstatt einer Datenmenge von 112 Bit nunmehr 128 Bit zu übertragen sind. Da auch Vielfache hiervon zu übertragen sein können, bzw. höhere Datenmengen vorliegen, kann die Paketlänge auch erhöht werden.

Gemäß einem weiteren Aspekt der vorliegenden Erfindung betragen die zu übertragenen Daten 112 Bit oder ein Vielfaches hiervon. Dies hat den Vorteil, dass das vorgeschlagene Verfahren sich besonders effizient auf diese Datensegmente anwenden lässt. So sind bei 112 Bit breiten Datensegmente, welche in Symbolen von 128 Bit übertragen werden, die Kodierungen besonders vorteilhaft. Würde man die volle Anzahl an Bit kodieren, so würde sich ein rasant steigender Aufwand bzw. eine rasant ansteigende Komplexität bei der Kodierung einstellen. Vorliegend werden die zu übertragenen Daten auf vier Paketlängen beschränkt und hierbei ist es bei der Kodierung einfach eine Kodierungstabelle zu erstellen, welche nicht mehr die Komplexität aufweist, wie bei einer Paketübertragung mittels einer einzigen Datenlänge. Eine einzige Datenlänge würde die zu übertragende Bitfolge definieren, welche sehr lang ist. Die Komplexität hierzu eine Kodierung zu finden steigt jedoch exponentiell. Die Teildatenlängen, beispielsweise vier Längen, brechen diese Komplexität auf eine weit geringe Anzahl an Kodiermöglichkeiten herunter. Somit erfolgt erfindungsgemäß ein effizientes Kodieren. Es werden also erfindungsgemäß die Kodierungstabellen wesentlich kürzer beziehungsweise die Anzahl der nötigen Kodierungsvorschriften signifikant gegenüber einer herkömmlichen Kodierungstabelle reduziert.

Gemäß einem weiteren Aspekt der vorliegenden Erfindung werden mit der zu übertragenen Bitfolge ein Pfadidentifikator, eine Laufnummer, ein Zelltyp, mindestens eine Prüfsumme, mindestens eine Nutzdateninformation und/ oder eine weitere Nutzdateninformation übermittelt. Dies hat den Vorteil, dass unterschiedliche Datenfelder mit übermittelt werden können, welche den virtuellen Pfad beschreiben oder aber eine Sequenznummer aufweisen, die einen Hinweis auf eine Reihenfolge der Pakete liefert. Darüber hinaus können weitere Datenfelder übertragen werden, welche angeben, ob die Daten vollständig übertragen wurden wie zum Beispiel eine Prüfsumme.

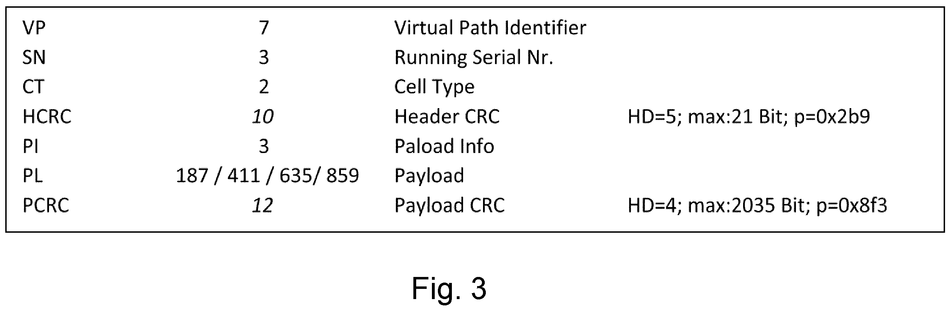

Gemäß einem weiteren Aspekt der vorliegenden Erfindung betragen die Overhead Daten 25 oder 37 Bit. Dies hat den Vorteil, dass eine ausreichende aber trotzdem minimale Bitlänge gefunden wurde, die alle möglichen Daten kodieren können, die additiv zur Nutzdatenlast notwendig sind. Nur beispielhaft sei hier auf die Figur 3 verwiesen, welche die ersten 5 Datenfelder mit 25 Bit kodiert und zusätzlich eine optionale Prüfnummer von 12 Bit vorsieht. Somit wurde empirisch ermittelt, dass diese Bitlängen optimal sind und somit nicht mehr Bits als notwendig sind übertragen werden und zudem dennoch alle notwendigen Informationen bereitgestellt werden können.

Gemäß einem weiteren Aspekt der vorliegenden Erfindung wird eine abgespeicherte Metrik verwendet, die angibt welche der vier vordefinierten Paketlängen zu wählen ist. Dies hat den Vorteil, dass in der Metrik abgespeichert werden kann, welche Bandbreitenvorgabe bzw. welche Latenzzeitenvorgabe zu welcher Paketlänge führt. Somit können die geeigneten Paketlängen empirisch ermittelt werden und es kann dynamisch zur Laufzeit angepasst werden, wann welche Paketlängen zu verwenden sind. Dies kann gesondert für alle bis zu 128 virtuellen Datenpfade erfolgen.

Gemäß einem weiteren Aspekt der vorliegenden Erfindung benennt die Metrik die jeweilige Paketlänge und berücksichtigt hierbei die Bandbreite und/ oder die zu übertragende Paketlänge. Dies hat den Vorteil, dass die zu übertragende Paketlänge ebenfalls berücksichtigt wird und bei größeren Daten wird eine größere Paketlänge benannt. Bei der zu übertragenen Paketlänge handelt es sich um die gesamte Paketlänge, welche zu übertragen ist, die wiederum erfindungsgemäß in eine Paketlänge der vier benannten Klassen unterteilt wird.

Gemäß einem weiteren Aspekt der vorliegenden Erfindung wird bei niedriger Bandbreite eine kürzere Paketlänge gewählt. Dies hat den Vorteil, dass die Bandbreite ausreichend gewählt wird um kürzere Paketlängen zu übersenden. Liegen kürzere Paketlängen vor, so wird typischerweise auch von einer geringeren Gesamtdatenmenge ausgegangen, welche zu übertragen ist und dementsprechend wird auch eine niedrige Bandbreite ausreichend sein.

Gemäß einem weiteren Aspekt der vorliegenden Erfindung wird bei höherem Bandbreitenbedarf eine längere Paketlänge gewählt. Dies hat den Vorteil, dass bei mehr Bandbreitenbedarf mehr Daten das heißt auch mehr Nutzdaten pro Kopfdaten übertragen werden. Bei einer größeren Paketlänge und konstanten Kopfdaten (Overhead) wir ein besseres Daten/Overhead Verhältnis erzeugt. Eine längere Paketlänge ist immer dann vorteilhaft, wenn größere Datenmengen zu übertragen sind. Die größeren Nutzdaten benötigen eben relativ weniger Kopfdaten da je Kopfdatum mehr Nutzdaten übertragen werden.

Gemäß einem weiteren Aspekt der vorliegenden Erfindung wird bei weniger zu übertragenen Daten eine kurze Paketlänge gewählt und bei einer hohen Anzahl zu übertragenen Daten eine hohe Paketlänge. Dies hat den Vorteil, dass das Verhältnis aus konstantem Overhead bzw. Kopfdaten zu Nutzdaten verringert werden. Die Paketlängen können somit nicht nur in Abhängigkeit der Bandbreite bzw. der Latenzzeitanforderungen gewählt werden, sondern es werden hier additiv die zu übertragenen Daten in ihrer Größe berücksichtigt. Dies hat Einfluss auf die Wahl der Paketlänge.

Gemäß einem weiteren Aspekt der vorliegenden Erfindung wird eine abgespeicherte Metrik verwendet, welche angibt, welche Paketlänge in welchem Wertebereich der Latenzzeitanforderung und/ oder der verfügbaren Bandbreite gewählt wird. Dies hat den Vorteil, dass die Latenzzeitanforderungen und die Bandbreiten klassifiziert werden können und somit können die Wertebereiche unterteilt werden. Typischerweise wird ein Rahmen vorgegeben, wann eine Latenzzeitanforderungen bzw. eine Bandbreite hoch oder niedrig ist. Innerhalb dieses Rahmens erfolgt dann eine Klassifizierung, anhand derer die Paketlänge aus den vier Klassen ausgewählt werden kann. Die Latenzzeitanforderungen und die Bandbreite liegt immer innerhalb bestimmter Rahmenbereiche bzw. Wertebereiche vor, in die der konkret vorliegende Wert einzusortieren ist. Innerhalb dieser Wertebereiche kann klassifiziert werden ob die verfügbare Bandbreite bzw. die Latenzzeitanforderungen niedrig, niedrig bis mittel, mittel bis hoch oder hoch ist. Hierzu sind auch andere Klassifizierungen möglich, anhand derer die Metrik vorgibt, welche der vier Klassen von Paketlängen nunmehr zu verwenden ist.

Gemäß einem weiteren Aspekt der vorliegenden Erfindung wird eine abgespeicherte Metrik verwendet, welche angibt, bei welcher Latenzzeitanforderung und welcher Bandbreite welche Paketlänge gewählt wird. Dies hat den Vorteil, dass eine Balance geschaffen wird bezüglich Latenzzeitanforderung und Bandbreite, die genau angibt, wann welche Paketlänge je virtuellen Datenkanal verwendet wird. Es erfolgt also eine Abbildung der verfügbaren Bandbreiten und Latenzzeitanforderungen auf eine Klasse der vier Paketlängen. Die entsprechende Paketlänge wird sodann gewählt.

Gemäß einem weiteren Aspekt der vorliegenden Erfindung sind die vier vordefinierten Nutzdatenlängen 187 Bit, 411 Bit, 635 Bit und 859 Bit. Dies hat den Vorteil, dass eine konstante Paket Segmentlänge von 112 Bit verwendet werden kann und zudem Kopfdaten von 25 Bit verwenden können und darüber hinaus eine Prüfsumme von 12 Bit verwendet werden kann. Erfindungsgemäß wurde ermittelt, dass sich Daten von 112 Bit derart bezüglich der Disparität besonders vorteilhaft kodieren lassen, dass 128 Bit entstehen und insofern ist eine Bitlänge von 112 Bit pro Paketsegment besonders vorteilhaft. Erfindungsgemäß werden nunmehr Vielfache von 112 Bit versendet, je nachdem wie groß die zu übertragende Datenmenge ist. Bei einer Bitlänge, welche eines Vielfachen von 112 Bit entspricht, und wobei das Vielfache gleich 2, 4, 6 oder 8 ist ergibt sich bei Kopfdaten von 25 Bit und einer Prüfsumme von 12 Bit die folgende Formel:

$$112 \text{ Bit} * n - 25 - 12$$

sodass also bei Auswahl der 4 möglichen Datenpaketlängen die genannten Werte von 187, 411, 635 und 859 Bit für die Nutzdaten entstehen. Dies schafft eine besonders vorteilhafte Kodierung und entspricht den vorgeschlagenen 4 Paketlängen.

Gemäß einem weiteren Aspekt der vorliegenden Erfindung wird der physische Datenkanal entweder elektrisch oder optisch betrieben. Dies hat den Vorteil, dass unterschiedliche Übertragungstechniken möglich sind und sich dennoch bis zu 128 virtuelle Datenkanäle einrichten lassen.

Ein Aspekt der vorliegenden Erfindung ist es, mehrere Datenströme (Video, Audio und Daten) in einem Transportframe zu bündeln und seriell zu übertragen. Die unterschiedlichen Datenformate haben nicht nur unterschiedliche Bandbreitenanforderungen, sondern auch unterschiedliche Latenz-, und Bitfehlerratenanforderungen. Insbesondere die Übertragung heutiger Videodatenformate erfordert nicht nur die Übertragung der reinen Videodaten und deren Frame-Informationen, sondern auch die Unterstützung von Verschlüsselungsverfahren wie HDCP. All dies erfordert viele unterschiedliche Datenkanäle mit unterschiedlichsten Anforderungen an Bandbreite, Latenz, und Bitfehlerrate. Hinzu kommt der Wunsch nach weitaus komplexeren Netzwerkarchitekturen als eine einfache Sender-Empfänger-Architektur bietet. Architekturen mit mehreren Repeatern, wo Datenpfade beginnen und enden können, Verzweigungen (Y) auch mit der Möglichkeit, Datenpfade wieder in einen Link zu integrieren, sind vorteilhaft.

Die Technologie folgt gemäß einem Aspekt der vorliegenden Erfindung dem Grundgedanken die Daten der unterschiedlichen Dienste zu bündeln, bietet aber völlig neue Möglichkeiten hinsichtlich Netzwerkarchitekturen und erlaubt neue Ansätze bei der Implementierung heutiger Videoschnittstellen. Darüber hinaus kann sie als universelle Datentransportschicht verwendet werden, beispielsweise auch zur Übertragung von Ethernet- oder Kameradaten oder jeglicher Art von Sensordaten.

Bei einem virtuellen Pfad (bei dieser Erfindung) nehmen alle Pakete/ Zellen denselben Pfad, im Gegensatz zu IP, wo ein Paket sein Ziel über verschiedene Pfade erreichen könnte als vorherige und nachfolgende Pakete. Latenz über einen virtuellen Pfad sind somit konstant.

Virtuelle Pfade basierend auf Datenzellen haben außerdem den Vorteil, dass sie als Multiplexing -Layer für unterschiedliche Dienste (Video, Audio, Ethernet) verwendet werden können

Virtuelle Pfade verbrauchen nur dann Bandbreite, wenn tatsächlich Daten übertragen werden.

Das Konzept der virtuellen Pfade ermöglicht es auch, komplexe und weitreichende Diagnose- und Netzwerkkonfigurationsfunktionen zur Laufzeit mit eigenen (virtuellen) Datenkanälen zu realisieren.

Gemäß einem Aspekt der vorliegenden Erfindung wird eine virtuelle Pfadschicht zwischen der physikalischen Schicht (Serializer und Framer) und den verschiedenen Anwendungsdatenschnittstellen implementiert.

Diese wird gemäß einem Aspekt der vorliegenden Erfindung verwendet, um die verschiedenen Datenpfade zu multiplexen und komplexere Architekturen mit Repeatern und Verzweigungen zu unterstützen. Dies geschieht im Wesentlichen in einer Unterschicht der virtuellen Pfadschicht der Zell-Schicht.

Ein weiterer Teil der virtuellen Pfadschicht ist gemäß einem Aspekt der vorliegenden Erfindung eine Anwendungsanpassungsschicht, die die Paketierung von Video (Stream) oder z.B. Ethernet-(Paket-)Daten in das Zellformat vornimmt. Diese Anwendungsanpassungsschicht umfasst auch die OAM-Funktionen für die Netzwerkdiagnose und -verwaltung.

Die Technologie kann gemäß einem Aspekt der vorliegenden Erfindung die Grundlage für die Übertragung einer Vielzahl von Datenformaten über eine serielle Verbindung im Auto (und anderswo) sein. Es bildet damit die Basis für eine neue Gerätegeneration.

Die hohen seriellen Bandbreiten machen es erforderlich, Architekturen, Zellformate und Schnittstellen zu definieren, die flexible interne Datenbusbreiten ermöglichen, um die Geschwindigkeit des internen Taktsystems an die Möglichkeiten der Chiptechnologie anzupassen.

Die virtuelle Pfadschicht ist gemäß einem Aspekt der vorliegenden Erfindung die physikalische Schicht, die aus der Übertragungsteilschicht und der Teilschicht des physikalischen Mediums besteht, die Zellschicht und die Anwendungsanpassungsschicht, die die Segmentierungs- und Reassembly Sublayer und die Funktionen zum Anpassen der Datenformate an die entsprechende Anwendung enthält.

Ein weiterer Teil der virtuellen Pfadschicht ist gemäß einem Aspekt der vorliegenden Erfindung die Physikalische Schicht. Eine Hauptaufgabe besteht darin, die physikalische Verbindung zu anderen physikalischen Schichten herzustellen. Diese Verbindung ist grundsätzlich bidirektional zu verstehen. Theoretisch lässt sich diese Verbindung über verschiedenste Medien realisieren. Praktisch werden zwei serielle differenzielle GBps-Verbindungen verwendet. In dieser Schicht erfolgen die Leitungskodierung, das Einfügen von Leerzellen zur Entkopplung der Zellenrate von der Verbindungsrate und die Integration des Zellenstroms in den seriellen Rahmen.

In der Zellschicht werden die segmentierten Daten (Zell-Nutzdaten) der darüber liegenden Segmentation & Reassembly-Unterschicht mit Header, VP-Kennung und CRC zu vollständigen Zellen zusammengesetzt oder Zellen werden CRC-geprüft und die Nutzlast wird an die Segmentierungs- und Reassembly-Teilschicht weitergegeben. Hier erfolgt auch das Multiplexen der unterschiedlichen Zellströme der Anwendungsanpassungsfunktionen bzw. die Verteilung der Zellnutzlasten auf die Anwendungsanpassungsfunktionen gemäß dem VP Identifier. (Einspeisen / Ausspeisen)

In der Zellschicht erfolgt gemäß einem Aspekt der vorliegenden Erfindung auch das Multiplexing und Demultiplexing von Zellströmen in Repeatern und Splittern (Forwarding).

Die Aufgabe der Anwendungsanpassungsfunktionen besteht gemäß einem Aspekt der vorliegenden Erfindung darin, die Daten der Anwendungsschnittstellen an das Format des Nutzdatenfeldes der Zelle anzupassen und Steuerinformationen an die Gegenseite zu übermitteln bzw. Steuerinformationen der Gegenseite für die zu verwenden Anpassung (Zeitgenerierung, Rahmenbildung).

Gemäß einem Aspekt der vorliegenden Erfindung sind alle virtuellen Datenpfade unidirektional, d.h. sie beginnen bei einem Initiator und enden bei einem oder mehreren Zielen. Wenn virtuelle Datenpfade logisch zusammengehören, z. HDCP für einen Videokanal, und somit einen bidirektionalen Datenpfad bilden, sollten diese Pfade dieselben VP-Kennungen haben.

Der virtuelle Datenpfad beginnt bei einem Initiator und endet bei einem oder mehreren Zielen. Die Realisierung erfolgt durch die

Zellteilschicht und führt die folgenden Funktionen auf dem virtuellen Pfad aus:

- Multiplexing hinzufügen/löschen

- VP-Übersetzung

Die Erfindung ermöglicht es bis zu 128 virtuelle Datenpfade über einen gemeinsamen Physical Layer (Kabel/ Leitung) zu realisieren. Dabei verhalten sich die Datenpfade so, als ob sie unabhängig voneinander über separate Leitungen / Kabel geführt werden. Die Verwendung von einer Leitung und einem Stecker System für 128 Datenpfade anstelle von 128 Leitungen und Stecker Systemen spart Ressourcen (Kabel, Stecker), potenzielle Fehlerquellen (mechanisch, elektrisch, EMV) und Gewicht im Auto.

Auf Grund der zellbasierten Übertragung ist die Latenzzeit der Datenübertragung nicht an die Bandbreite des Übertragungskanals gekoppelt, so wie das bei Framebasierten (TDM) der Fall ist. Einem Datenpfad der nur wenig Bandbreite benötigt (z.B. Video Encryption Steuerung HDCP) kann trotzdem mit niedrigster Latenzzeit übertragen werden.

Weiter, auf Grund der zellbasierten Übertragung "verbrauchen" / benötigen Datenpfade nur dann Bandbreite, wenn Sie tatsächlich Daten übertragen. Das ist bei Framebasierten (TDM) nicht der Fall, da hier einem Datenpfad eine feste Bandbreite zugewiesen wird.

Um Daten seriell über ein elektrisches oder optisches Medium zu übertragen, muss das serielle Datensignal bestimmte Charakteristika aufweisen. Typischerweise muss das Signal gleichspannungsfrei sein (Anzahl Nullen und Einsen gleich über einen bestimmten Zeitraum) und es muss in einem bestimmten Abstand Übergänge von Null nach Eins bzw. umgekehrt aufweisen, um dem Empfänger eine Synchronisation der einzelnen Daten-Bits zu ermöglichen. Dies wird durch den Leitungscode erreicht. Dabei werden die zu übertragenden Daten vor dem Senden entsprechend codiert und nach dem Empfangen wieder de-kodiert. Die Kodierung der Daten führt zu einem Overhead bei der Übertragung. Es müssen mehr Bits als "reine" Datenbits übertragen werden. Ziel ist es immer diesen Overhead so gering wie möglich zu halten.

Bei der vorliegenden Erfindung wurde hierfür gemäß einem Aspekt der vorliegenden Erfindung ein 112B/128B Blockcode verwendet. Der entwickelte Blockcode stellt dabei einen sehr guten Kompromiss zwischen Aufwand für die Erzeugung des Codes und dem dabei entstehenden Overhead dar.

Die Kodierung von 112Bit Daten in 128Bit Symbole (Leitungscode) bedeutet einen Overhead von 14.28%. Zum Vergleich hat ein gebräuchlicher 8B/10B Linecode 25% Overhead.

Gleichzeitig ist die Implementierung des Linecode immer noch sehr einfach mit digitaler Logik möglich.

Stream data (kontinuierlicher Datenstrom)

Die Stream Data-Funktion kombiniert die Kreuzung des Anwendungstaktsystems und des Zelldatentaktsystems und die Umwandlung der Datenbitbreite der Anwendungsdaten und der Zelldaten. Dabei ist die Zell Nutzlast bereits so vorformatiert, dass Zell Footer und Header in die erste und letzte Zellzeile passen.

Gestreamte Daten sind (normalerweise) quellensynchron. Hier wird die Zeitdomänenüberquerung (clock domain crossing) des Datenpfads von der Anwendungszeitdomäne zur Zeitschichtdomäne (application clock domain to the Virtual Path Layer clock domain) durchgeführt.

In Senderichtung ist ein Datenpuffer vorgesehen, in den die quellensynchronen Daten mit dem Quellentakt geschrieben werden. Die Segmentierungsschicht ruft die Daten aus diesem Puffer nach Bedarf ab, um die Datenformatumwandlung in die N Bit breiten Reihen der Zellen durchzuführen. Frame-Daten (z. B.: Hsync, Vsync, DE) werden in Payload Info Bits kodiert, sodass auf der Empfängerseite eine Rekonstruktion des Frames möglich ist.

In der Empfangsrichtung werden die Zellendaten von der Reassembly Teilschicht in einen Datenpuffer geschrieben, wobei die Zellenreihen-Bitbreite ist (with cell row bit width). Basierend auf den Payload Info Bits werden die Rahmeninformationen rekonstruiert. Der Quellentakt wird zum Beispiel unter Verwendung von Pufferfüllstand und Taktsynthese regeneriert.

Ist eine Verschlüsselung der Daten erforderlich (HDCP), werden in dieser Funktion die Zelldaten verschlüsselt bzw. entschlüsselt.

Aufgrund der unterschiedlichen Arten von gestreamten Daten, wie z. B.: Audio, Video mit und ohne Verschlüsselung, kann es unterschiedliche Implementierungen dieser Grundfunktion geben (z. B.: VStream In/Out; AStream In/Out; EncVStream In/Out).

Die Schnittstelle zur Segmentierungs- & Reassembly Teilschicht ist für alle Funktionen gleich.

Burst data (diskontinuierlicher Datenstrom)

Die Burst-Daten-Funktion kombiniert die Zeitdomänenkreuzung und die Bitweite Umwandlung (clock domain crossing and data bit width conversion) von Daten von der Anwendungsschnittstelle zu den N Bits der Zellenzeilen. Dabei ist die Zellzeilennutzlast bereits so vorformatiert, dass Zellfuß und -kopf in die erste und letzte Zellzeile passen.

Burst-Daten sind (normalerweise) synchron zu einer externen Zeit und haben unterschiedliche Kennzeichnungssignale für Richtung und Datentyp (Adresse / Daten / ByteEnable).

Diese Daten werden normalerweise von Steuerleitungen begleitet, um ein bestimmtes Protokoll zu realisieren.

In Senderichtung ist ein Datenpuffer vorgesehen, in den die Burstdaten mit dem Schnittstellentakt geschrieben werden. Die Segmentierungsschicht ruft die Daten aus diesem Puffer nach Bedarf ab, um die Datenformatumwandlung in die N Bit breiten Reihen Zellen durchzuführen.

In der Empfangsrichtung werden die Zellendaten von der Reassembly Teilschicht in einen Datenpuffer geschrieben, wobei die Zellenreihe bitbreit ist. Basierend auf den Payload Info Bits werden die Schnittstellensteuersignale rekonstruiert.

Die Payload-Info-Bits werden verwendet, um die Steuersignale der anwendungsspezifischen Schnittstellen zu erzeugen oder die Protokollzustandsmaschinen in den anwendungsspezifischen Schnittstellen zu synchronisieren.

Aufgrund der unterschiedlichen Schnittstellen, die Burst-ähnliche Daten bereitstellen (SPI, I2C, MII), kann es unterschiedliche Implementierungen dieser Grundfunktion geben (z. B.: SPIBurst, I2CBurst, MIIBurst).

Dementsprechend wird es auch (leicht) unterschiedliche Stream In/Out-Schnittstellen geben, deren Struktur jedoch gleich sein sollte.

Die Aufgabe wird auch gelöst durch eine Systemanordnung zum paketbasierten Übertragen von Daten auf bis zu 128 virtuellen Datenpfaden über einen physischen Datenkanal eines Automobils mit deterministischer Latenzzeit, aufweisend eine Schnittstelleneinheit eingerichtet zum Auslesen einer bereitgestellten Latenzzeitvorgabe und einer Bandbreitenvorgabe des Datenkanals für jeweils alle virtuellen Datenpfade zur Übertragung einer zu übertragenden Bitfolge; und eine Initialisierungseinheit eingerichtet zum Einstellen einer Paketlänge für jeweils jeden der 128 Datenpfade unter Berücksichtigung von vier vordefinierten Paketlängen der Bitfolge, wobei die Paketlänge jeweils mittels einer Auswahleinheit derart gewählt wird, dass bei kurzer Latenzzeitanforderung und niedriger verfügbarer Bandbreite kurze Paketlängen verwendet werden und bei langer Latenzzeitanforderung und hoher verfügbarer Bandbreite lange Paketlängen gewählt werden.

Die Aufgabe wird auch gelöst durch ein Computerprogrammprodukt mit Steuerbefehlen, welche das vorgeschlagene Verfahren implementieren beziehungsweise die vorgeschlagene Vorrichtung betreiben.

Erfindungsgemäß ist es besonders vorteilhaft, dass das Verfahren zum Betreiben der vorgeschlagenen Vorrichtungen und Einheiten verwendet werden kann. Ferner eignen sich die vorgeschlagenen Vorrichtungen und Einrichtungen zur Ausführung des erfindungsgemäßen Verfahrens. Somit implementiert jeweils die Vorrichtung strukturelle Merkmale, welche geeignet sind, das entsprechende Verfahren auszuführen. Die strukturellen Merkmale können jedoch auch als Verfahrensschritte ausgestaltet werden. Auch hält das vorgeschlagene Verfahren Schritte zur Umsetzung der Funktion der strukturellen Merkmale bereit. Darüber hinaus können physische Komponenten gleicherweise auch virtuell bzw. virtualisiert bereitgestellt werden.

Weitere Vorteile, Merkmale und Einzelheiten der Erfindung ergeben sich aus der nachfolgenden Beschreibung, in der unter Bezugnahme auf die Zeichnungen Aspekte der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Ebenso können die vorstehend genannten und die hier weiter ausgeführten Merkmale je für sich oder zu mehreren in beliebigen Kombinationen Verwendung finden. Funktionsähnliche oder identische Bauteile oder Komponenten sind teilweise mit gleichen Bezugszeichen versehen. Die in der Beschreibung der Ausführungsbeispiele verwendeten Begriffe "links", "rechts", "oben" und "unten" beziehen sich auf die Zeichnungen in einer Ausrichtung mit normal lesbarer Figurenbezeichnung bzw. normal lesbaren Bezugszeichen. Die gezeigten und beschriebenen Ausführungsformen sind nicht als abschließend zu verstehen, sondern haben beispielhaften Charakter zur Erläuterung der Erfindung. Die detaillierte Beschreibung dient der Information des Fachmanns, daher werden bei der Beschreibung bekannte Schaltungen, Strukturen und Verfahren nicht im Detail gezeigt oder erläutert, um das Verständnis der vorliegenden Beschreibung nicht zu erschweren. In den Figuren zeigen:

Figur 1:      ein schematisches Ablaufdiagramm eines Verfahrens zum Initialisieren einer Systemanordnung zum paketbasierten Übertragen von Daten gemäß einem Aspekt der vorliegenden Erfindung;

Figur 2:      ein Rahmenformat, welches in dem vorgeschlagenen Verfahren bzw. in der vorgeschlagenen Systemanordnung gemäß einem Aspekt der vorliegenden Erfindung Anwendung findet;

Figur 3:      Rahmenfelder, wie sie gemäß einem Aspekt der vorliegenden Erfindung Anwendung finden;

Figuren 4A, 4B:      Metriken, welche anhand von Latenzzeitanforderungen und verfügbarer Bandbreite eine Länge einer Bit Folge gemäß einem Aspekt der vorliegenden Erfindung auswählen; und

Figur 5:      eine beispielhafte Kodierung von Datensegmente auf Symbole, wobei 14 Bit auf 16 Bit derart kodiert werden, dass die Disparität gemäß einem Aspekt der vorliegenden Erfindung optimiert ist.

Die vorliegenden Figuren weisen teilweise Parameter auf, welche dem Fachmann in der englischen Bezeichnung so geläufig sind und welche als Parameter verwendet werden und so nicht zu übersetzen sind.

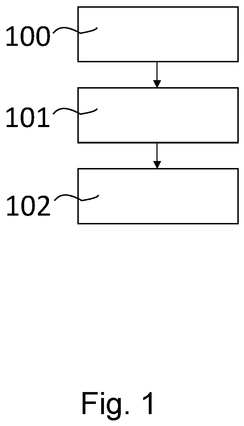

Figur 1 zeigt in ein schematisches Ablaufdiagramm eines Verfahrens zum Initialisieren einer Systemanordnung zum paketbasierten Übertragen von Daten gemäß einem Aspekt der vorliegenden Erfindung auf bis zu 128 virtuellen Datenpfaden über einen physischen Datenkanal eines Automobils mit deterministischer Latenzzeit, aufweisend ein Auslesen 100 einer bereitgestellten Latenzzeitvorgabe und einer Bandbreitenvorgabe des Datenkanals für jeweils alle virtuellen Datenpfade zur Übertragung einer zu übertragenden Bitfolge; und ein Einstellen 102 einer Paketlänge für jeweils jeden der 128 Datenpfade unter Berücksichtigung von vier vordefinierten Paketlängen der Bitfolge, wobei die Paketlänge jeweils derart gewählt 101 wird, dass bei kurzer Latenzzeitanforderung und niedriger verfügbarer Bandbreite kurze Paketlängen verwendet werden und bei langer Latenzzeitanforderung und hoher verfügbarer Bandbreite lange Paketlängen gewählt werden.

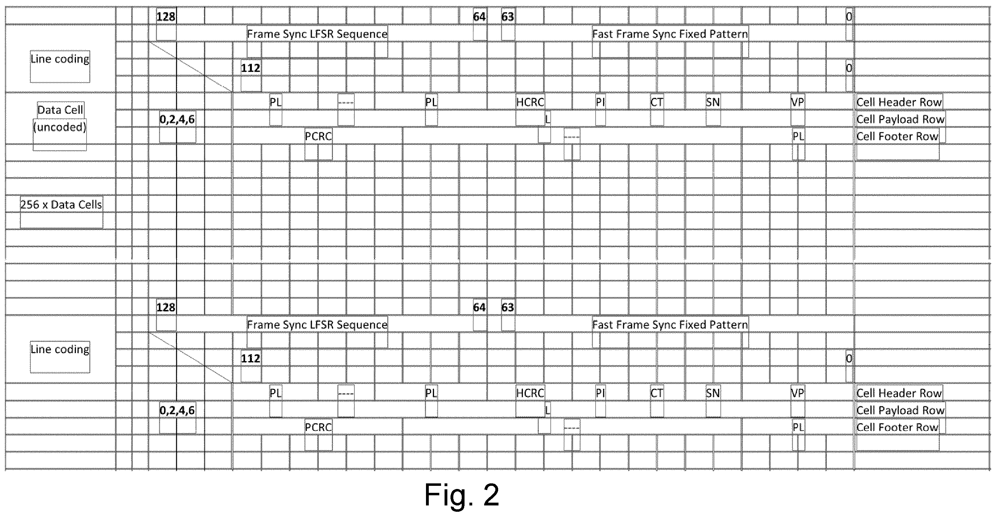

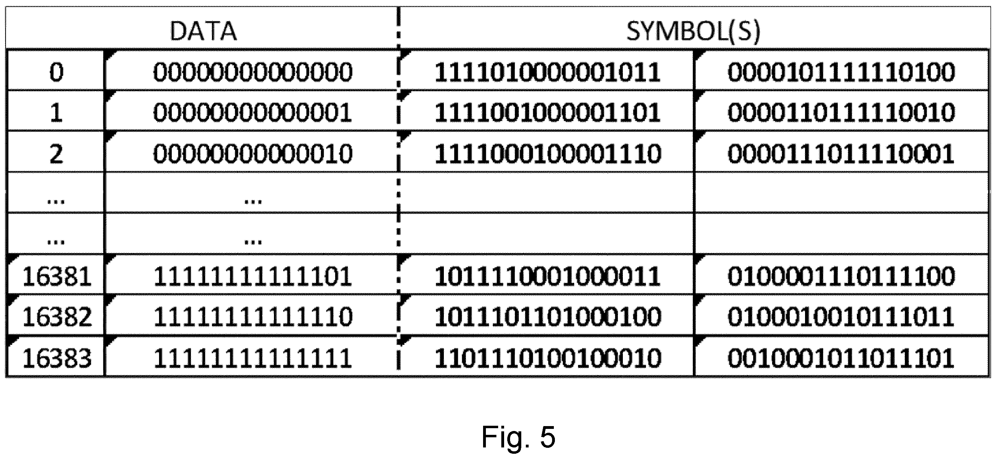

Figur 2 zeigt ein Rahmenformat, wobei 112 Bit als 128 Bit kodiert werden, was zu einer bezüglich der Disparität optimierten Bitfolge führt, wie beispielsweise in Figur 5 gezeigt ist. Die unkodierten Datenzellen betragen 112 Bit und werden derart auf 128 Bit kodiert, dass die Disparität, also das Verhältnis von Nullen und Einsen, optimiert ist. Weiter wird die Lauflänge des Symbols auf 7 begrenzt. Dies optimiert die Datenübertragung derart, dass eine entsprechende Bitfolge bezüglich des Taktes besonders vorteilhaft ausgelesen werden kann.

Das Übertragungsverfahren kombiniert eine zellorientierte (paketorientierte) Datenübertragung mit einem einfachen Rahmen zur Synchronisierung von Sender und Empfänger. Dabei werden gemäß einem Aspekt der vorliegenden Erfindung, 256 Daten Zellen übertragen und dann folgt ein 128 Bit breites Synchronisationswort. Dieses Synchronisationswort besteht aus zwei Teilen, einer 64 Bit breiten selbstsynchronisierenden LFSR Sequenz zur Überwachung der Synchronität von Sender und Empfänger und einem konstanten 64 Bit breiten Synchronisationspattern zur schnellen Synchronisation von Sender und Empfänger. Das Synchronisationspattern ist gemäß einem Aspekt der vorliegenden Erfindung einmalig im gesamten Datenstrom. Dies wird durch die gewählte Leitungskodierung (siehe später) sichergestellt. Der Overhead durch die Synchronisierung beträgt: 128Bits/(256*2*128)Bits = 0,2% im schlechtesten Fall und 128Bits/(256*8*128)Bits = 0,05% im Besten Fall.

Das Übertragungsverfahren implementiert gemäß einem Aspekt der vorliegenden Erfindung 128 virtuelle Datenpfade, indem es die zu übertragenden Daten von bis zu 128 Datenquellen in 4 unterschiedliche lange (konfigurierbar) Zellen packt. Jede Zelle bekommt eine 7 Bit breite Adresse die mit dem virtuellen Datenpfad 1:1 korrespondiert.

Eine Datenzelle besteht gemäß einem Aspekt der vorliegenden Erfindung aus einem vordefinierten, konstant langen Header Feld mit Payload Daten (Cell Header Row), einem Payload Feld mit konfigurierbarer Länge (0, 2*128,4*128,6*128) (Cell Payload Row) und einem konstant langen Footer Feld mit Payload Checksumme und Payload Daten.

Figur 3 zeigt Rahmenfelder, welche gemäß der vorgeschlagenen Erfindung übertragen werden können. Die vorliegende Figur zeigt insbesondere die Bitlängen der Nutzdaten. Diese sind in vier Klassen eingeteilt bzw. vier vordefinierte Längen von Bits, wobei jeder virtuelle Datenkanal Daten gemäß dieser Länge überträgt. Zu den Nutzdaten hinzu werden die Overhead Daten übertragen, welche in der Tabelle oberhalb und/ oder unterhalb der Nutzdaten aufgeführt sind. Hieraus ergibt sich eine Bitlänge der Overhead Daten überhalb der Nutzdaten von 25 Bit und darüber hinaus kann, wie unterhalb der Nutzdaten angeführt ist, zuzüglich eine Prüfsumme von 12 Bit übertragen werden.

Die Aufgabe des Header Feldes ist es die Steuerung des Datenflusses durch das Übertragungssystem zu ermöglichen. Dazu wird eine 7 Bit breite Adresse die VP (Virtual Path Identifier) benutzt. Mit 7 Bit sind 128 unterschiedliche Datenpfade eindeutig adressierbar. Dies ist für eine automotive Applikation völlig ausreichend.

Eine weitere Aufgabe des Header Feldes ist es die Daten in der Zelle "markieren" zu können, um je nach Datenstrom bzw. Datenschnittstelle Rahmeninformationen wie Anfang/Ende eines Datenstroms oder aber Burst Informationen wie Daten-Paket Nr. mit zu übertragen, um eine Hardware unterstützte Paketierung/De-Paketierung der Datenströme zu ermöglichen, anders als zum Beispiel bei Ethernet wo dies Aufgabe vollständig in Software gelöst werden muss. Eine Hardware unterstützte Paketierung/De-Paketierung reduziert den Overhead für diese Aufgabe auf ein Minimum, in diesem Fall 3Bit PI (Payload Info).

Eine weitere Aufgabe des Header Feldes ist es die Länge des Datenfeldes effektiv zu kodieren. Dies passiert mit 2Bit CT (Cell Type)

Die 4 unterschiedlich großen Paketlängen sind gewählt worden, um einerseits unterschiedliche Bandbreiten und Latenzzeitanforderungen effizient umsetzen zu können aber andererseits den dazu notwendigen Steuerungsaufwand zu minimieren (2 Bit Zell Type Info pro Zelle).

Eine weitere Aufgabe des Header Feldes ist es, eine Integritätsprüfung des Datenstroms auf Hardwareebene zu ermöglichen. Dazu wird eine 3 Bit SN (Running Serial Nr) für jede Zelle generiert. In anderen Systemen (Ethernet) muss dies in Software und damit deutlich ineffizienter gelöst werden.

Auf Grund der zentralen Rolle der Headerfelder für Datenfluss und Datenauswertung sind die Felder des Headers gemäß einem Aspekt der vorliegenden Erfindung mit einem 10Bit CRC geschützt. Damit ist eine Hamming Distanz von 5 bei max. 21 Bit erreicht. Der Header ist damit deutlich besser geschützt als die Daten. Da der Header aber deutlich weniger Bits aufweist als das Payload Feld ist dieses sehr effizient. Anders als bei Ethernet wo Daten und Header mit demselben (kurzen) Polynom geschützt werden.

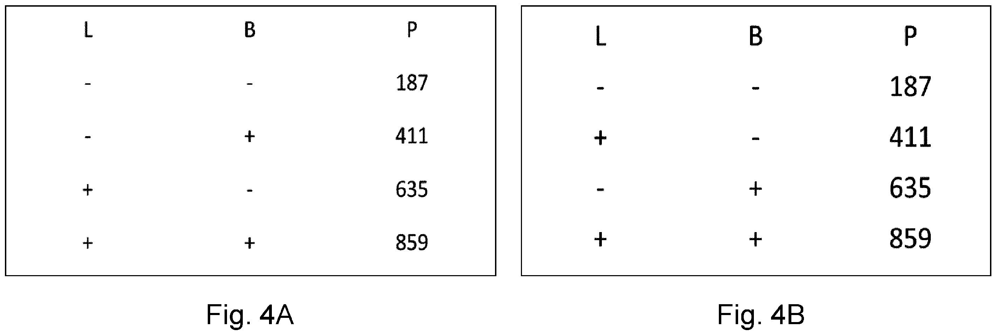

Die Figuren 4A und 4B zeigen eine Auswahl aus den vier zugrunde liegenden Klassen bzw. Bitlängen. Ganz rechts sind die vordefinierten Paketlängen angeführt, in der linken Spalte sind die Latenzzeitanforderungen angeführt und in der Mitte die verfügbare Bandbreite. Ist also beispielsweise die Latenzzeitanforderungen gering und die verfügbare Bandbreite gering so kann eine vordefinierte Paketlänge der Bitfolge von 187 gewählt werden. Ist hingegen die Latenzzeitanforderung hoch und die verfügbare Bandbreite hoch, so kann eine Paketlänge von 859 Bit gewählt werden. In den gemischten Belegungen kann entweder die Metrik gemäß Figur 4A gewählt werden oder die Metrik gemäß Figur 4B. So kann man bei niedriger Latenzzeitanforderungen und hoher Bandbreite entweder 411 Bit wählen oder 635 Bit. Analoges gilt für eine hohe Latenzzeitanforderung und niedrige verfügbare Bandbreite, wo entweder 635 Bit gewählt werden können oder 411 Bit.

Figur 5 zeigt beispielhaft, wie 14 Bit derart in 16 Bit kodiert werden können, dass die Disparität des resultierenden Datenstroms optimiert ist. Da für die Datenübertragung eine optimierte Disparität vorteilhaft ist, werden gemäß einem Aspekt der vorliegenden Erfindung 112 Bit in 128 Bit kodiert. Dementsprechend wurden auch in der vorgeschlagenen technischen Lehre die absoluten Werte empirisch ermittelt.

Vorliegend werden Zellen als Synonym für Rahmen beziehungsweise frames verwendet. Es kann sich hierbei auch um Pakete handeln.

Zellformat/ Rahmenformat

Die Zelle besteht gemäß einem Aspekt der vorliegenden Erfindung aus einem Header mit fester Bitlänge, einem Payload-Bereich mit 4 wählbaren Bitlängen und einem Footer wiederum mit fester Bitlänge.

Die Zellstruktur ist eine Folge von Bits wie folgt:

- Eine virtuelle 7-Bit-Pfadkennung (VP), die eine eindeutige Adresse des virtuellen Pfads darstellt.

- Eine 3-Bit-Sequenznummer (SN), die die Zellen fortlaufend in ihrer Reihenfolge nummeriert.

- Eine 2 Bit breite Cell Type (CT)-Kennung, die die Länge der Nutzdaten angibt.

- Eine 3 Bit breite Payload Information (PI), die zusätzliche Informationen über die Nutzlast enthält. Dies kann auch zur Synchronisation von Nutzdaten und Rahmendaten oder Steuerdaten verwendet werden.

- Ein 10 Bit breites CRC-Polynom (HCRC) zum Fehlerschutz der Header-Informationen. Das Polynom hat bis zu einer Bitfolge von 21 Bit (P=0x2B9) eine Hamming-Distanz von 5.

- Der Payload (PL)-Bereich hat eine Länge von: 187, 411, 635 oder 859 Bit, abhängig vom CT-Wert. Die kürzeste Nutzlast wird so gewählt, dass sie immer noch größer ist als die größte unterstützte (Video-) Streaming-Busbreite. (Sollte die Abbildung von Stromdaten auf die Zellennutzlast vereinfachen).

- Abschließend ein 12 Bit breites CRC-Polynom (PCRC) zum Fehlerschutz der Nutzdaten. Das Polynom hat bis zu einer Bitfolge von 2035 Bit (P=0x8F3) eine Hamming-Distanz von 4.

Format der Übertragungsrahmen

Der Übertragungsrahmen besteht gemäß einem Aspekt der vorliegenden Erfindung aus einer Folge von M-Bit breiten Wörtern. Der Rahmen beginnt mit einem M-Bit breiten "Komma"-Wort aus einer definierten Folge von Kommawörtern für die Rahmenausrichtung. Dann folgt K Zellen. Die Zellen bestehen aus 2, 4, 6 oder 8 N-Bit breiten Wörtern, die Header, Payload und Footer tragen. Diese N-Bit breiten Wörter werden zu M-Bit breiten Symbolen codiert (Zeilenkodierung).

Dieses Format wird gewählt, um die Verarbeitung von Zellendaten bei angemessenen Zeitfrequenzen zu ermöglichen, vorausgesetzt, dass der Serialisierer/ Deserialisierer immer einen Block von M Bits verarbeitet.

**Patentansprüche**

1. Verfahren zum Initialisieren einer Systemanordnung zum paketbasierten Übertragen von Daten auf bis zu 128 virtuellen Datenpfaden über einen physischen Datenkanal eines Automobils mit deterministischer Latenzzeit, aufweisend:

    - ein Auslesen (100) einer bereitgestellten Latenzzeitvorgabe und einer Bandbreitenvorgabe des Datenkanals für jeweils alle virtuellen Datenpfade zur Übertragung einer zu übertragenden Bitfolge;
    - ein Einstellen (102) einer Paketlänge für jeweils jeden der 128 Datenpfade unter Berücksichtigung von vier vordefinierten Paketlängen der Bitfolge, wobei die Paketlänge jeweils derart gewählt (101) wird, dass bei kurzer Latenzzeitanforderung und niedriger verfügbarer Bandbreite kurze Paketlängen verwendet werden und bei langer Latenzzeitanforderung und hoher verfügbarer Bandbreite lange Paketlängen gewählt werden.

2. Verfahren nach Anspruch 1, **dadurch gekenn-**

**zeichnet, dass** mittels einer Paketlängenerhöhung eine Reduzierung der Overhead-Datenmenge erfolgt.

3. Verfahren nach Anspruch 1 oder 2, **dadurch gekennzeichnet, dass** die zu übertragenden Daten n * 112 Bit +187 betragen.

4. Verfahren nach einem der vorhergehenden Ansprüche, **dadurch gekennzeichnet, dass** mit der zu übertragenden Bitfolge ein Pfadidentifikator, eine Laufnummer, ein Zelltyp, mindestens eine Prüfsumme, mindestens eine Nutzdateninformation und/ oder eine weitere Nutzdateninformation übermittelt werden.

5. Verfahren nach einem der vorhergehenden Ansprüche, **dadurch gekennzeichnet, dass** die Overheaddaten 25 oder 37 Bit betragen.

6. Verfahren nach einem der vorhergehenden Ansprüche, **dadurch gekennzeichnet, dass** eine abgespeicherte Metrik verwendet wird, die angibt, welche der vier vordefinierten Paketlängen zu wählen ist.

7. Verfahren nach Anspruch 6, **dadurch gekennzeichnet, dass** die Metrik die jeweilige Paketlänge benennt und hierbei die Bandbreite und/ oder die zu übertragende Paketlänge berücksichtigt.

8. Verfahren nach einem der vorhergehenden Ansprüche, **dadurch gekennzeichnet, dass** bei niedriger Bandbreite eine kürzere Paketlänge gewählt wird.

9. Verfahren nach einem der vorhergehenden Ansprüche, **dadurch gekennzeichnet, dass** bei höherer Bandbreite eine längere Paketlänge gewählt wird.

10. Verfahren nach einem der vorhergehenden Ansprüche, **dadurch gekennzeichnet, dass** bei einer geringen Anzahl von zu übertragenden Daten eine kurze Paketlänge gewählt wird und bei einer hohen Anzahl zu übertragenden Daten eine hohe Paketlänge genutzt wird.

11. Verfahren nach einem der vorhergehenden Ansprüche, **dadurch gekennzeichnet, dass** eine abgespeicherte Metrik verwendet wird, welche angibt, welche Paketlänge in welchem Wertebereich der Latenzzeitanforderung und/ oder der verfügbaren Bandbreite gewählt wird.

12. Verfahren nach einem der vorhergehenden Ansprüche, **dadurch gekennzeichnet, dass** eine abgespeicherte Metrik verwendet wird, welche angibt, bei welcher Latenzzeitanforderung und welcher Bandbreite welche Paketlänge gewählt wird.

**13.** Verfahren nach einem der vorhergehenden Ansprüche, **dadurch gekennzeichnet, dass** die vier vordefinierten Paketlängen 187 Bit, 411 Bit, 635 Bit und 859 Bit sind.

**14.** Verfahren nach einem der vorhergehenden Ansprüche, **dadurch gekennzeichnet, dass** der physische Datenkanal entweder elektrisch oder optisch betrieben wird.

**15.** Systemanordnung zum paketbasierten Übertragen von Daten auf bis zu 128 virtuellen Datenpfaden über einen physischen Datenkanal eines Automobils mit deterministischer Latenzzeit, aufweisend:

- eine Schnittstelleneinheit eingerichtet zum Auslesen (100) einer bereitgestellten Latenzzeitvorgabe und einer Bandbreitenvorgabe des Datenkanals für jeweils alle virtuellen Datenpfade zur Übertragung einer zu übertragenden Bitfolge;
- eine Initialisierungseinheit eingerichtet zum Einstellen (102) einer Paketlänge für jeweils jeden der 128 Datenpfade unter Berücksichtigung von vier vordefinierten Paketlängen der Bitfolge, wobei die Paketlänge jeweils mittels einer Auswahleinheit derart gewählt (101) wird, dass bei kurzer Latenzzeitanforderung und niedriger verfügbarer Bandbreite kurze Paketlängen verwendet werden und bei langer Latenzzeitanforderung und hoher verfügbarer Bandbreite lange Paketlängen gewählt werden.

**16.** Computerprogrammprodukt, umfassend Befehle, die bei der Ausführung des Programms durch mindestens einen Computer diesen veranlassen, die Schritte des Verfahrens nach einem der Ansprüche 1 bis 14 auszuführen.

**17.** Computerlesbares Speichermedium, umfassend Befehle, die bei der Ausführung durch mindestens einen Computer diesen veranlassen, die Schritte des Verfahrens nach einem der Ansprüche 1 bis 14 auszuführen.

**Claims**

**1.** A method for initialising a system arrangement for packet-based transmission of data on up to 128 virtual data paths via a physical data channel of an automobile with deterministic latency, comprising

- a readout (100) of a provided latency time specification and a bandwidth specification of the data channel for in each case all virtual data paths for the transmission of a bit sequence to be transmitted;

- setting (102) a packet length for each of the 128 data paths, taking into account four predefined packet lengths of the bit sequence, the packet length being selected (101) in each case such that short packet lengths are used for short latency requirements and low available bandwidth and long packet lengths are selected for long latency requirements and high available bandwidth.

**2.** The method according to claim 1, **characterised in that** the amount of overhead data is reduced by increasing the packet length.

**3.** The method according to claim 1 or 2, **characterised in that** the data to be transmitted is n * 112 bits +187.

**4.** The method according to one of the preceding claims, **characterised in that** a path identifier, a sequence number, a cell type, at least one checksum, at least one user data information item and/or a further user data information item are transmitted with the bit sequence to be transmitted.

**5.** The method according to one of the preceding claims, **characterised in that** the overhead data is 25 or 37 bits.

**6.** The method according to one of the preceding claims, **characterised in that** a stored metric is used which indicates which of the four predefined packet lengths is to be selected.

**7.** The method according to claim 6, **characterised in that** the metric designates the respective packet length and takes into account the bandwidth and/or the packet length to be transmitted.

**8.** The method according to one of the preceding claims, **characterised in that** a shorter packet length is selected for low bandwidth.

**9.** The method according to one of the preceding claims, **characterised in that** a longer packet length is selected for a higher bandwidth.

**10.** The method according to one of the preceding claims, **characterised in that** a short packet length is selected for a low number of data to be transmitted and a long packet length is used for a high number of data to be transmitted.

**11.** The method according to one of the preceding claims, **characterised in that** a stored metric is used which indicates which packet length is selected in which value range of the latency requirement and/or the available bandwidth.

**12.** The method according to one of the preceding claims, **characterised in that** a stored metric is used which indicates at which latency requirement and which bandwidth which packet length is selected.

**13.** The method according to one of the preceding claims, **characterised in that** the four predefined packet lengths are 187 bits, 411 bits, 635 bits and 859 bits.

**14.** The method according to one of the preceding claims, **characterised in that** the physical data channel is operated either electrically or optically.

**15.** A system arrangement for packet-based transmission of data on up to 128 virtual data paths via a physical data channel of an automobile with deterministic latency, comprising

- an interface unit set up to read out (100) a provided latency specification and a bandwidth specification of the data channel for all virtual data paths for the transmission of a bit sequence to be transmitted;
- an initialisation unit set up for setting (102) a packet length for each of the 128 data paths, taking into account four predefined packet lengths of the bit sequence, the packet length being selected (101) in each case by means of a selection unit in such a way that short packet lengths are used for short latency requirements and low available bandwidth and long packet lengths are selected for long latency requirements and high available bandwidth.

**16.** A computer program product comprising instructions which, when the program is executed by at least one computer, cause the computer to perform the steps of the method according to any one of claims 1 to 14.

**17.** A computer readable storage medium comprising instructions which, when executed by at least one computer, cause the computer to perform the steps of the method according to any one of claims 1 to 14.

**Revendications**

**1.** Procédé d'initialisation d'un agencement de système pour la transmission par paquets de données sur jusqu'à 128 chemins de données virtuels via un canal de données physique d'une automobile avec un temps de latence déterministe, comprenant :

- une lecture (100) d'une consigne de temps de latence mise à disposition et d'une consigne de largeur de bande du canal de données pour respectivement tous les chemins de données virtuels pour la transmission d'une séquence de bits à transmettre ;
- un réglage (102) d'une longueur de paquet pour chacun des 128 chemins de données en tenant compte de quatre longueurs de paquet prédéfinies de la séquence de bits, la longueur de paquet étant respectivement choisie (101) de telle sorte que des longueurs de paquet courtes soient utilisées en cas de courte exigence de temps de latence et de faible largeur de bande disponible et que des longueurs de paquet longues soient choisies en cas de longue exigence de temps de latence et de largeur de bande disponible élevée.

**2.** Procédé selon la revendication 1, **caractérisé en ce qu'**une réduction de la quantité de données de surcharge est réalisée au moyen d'une augmentation de la longueur des paquets.

**3.** Procédé selon la revendication 1 ou 2, **caractérisé en ce que** les données à transmettre sont de n * 112 bits + 187.

**4.** Procédé selon l'une des revendications précédentes, **caractérisé en ce qu'**un identificateur de chemin, un numéro d'ordre, un type de cellule, au moins une somme de contrôle, au moins une information de données utiles et/ou une autre information de données utiles sont transmis avec la séquence binaire à transmettre.

**5.** Procédé selon l'une des revendications précédentes, **caractérisé en ce que** les données de surcharge sont de 25 ou 37 bits.

**6.** Procédé selon l'une des revendications précédentes, **caractérisé en ce qu'**on utilise une métrique mémorisée qui indique laquelle des quatre longueurs de paquet prédéfinies doit être choisie.

**7.** Procédé selon la revendication 6, **caractérisé en ce que** la métrique désigne la longueur de paquet respective et tient compte de la largeur de bande et/ou de la longueur de paquet à transmettre.

**8.** Procédé selon l'une des revendications précédentes, **caractérisé en ce qu'**une longueur de paquet plus courte est choisie en cas de faible largeur de bande.

**9.** Procédé selon l'une des revendications précédentes, **caractérisé en ce qu'**une longueur de paquet plus longue est choisie pour une largeur de bande plus élevée.

**10.** Procédé selon l'une des revendications précédentes, **caractérisé en ce que**, lorsque le nombre de données à transmettre est faible, on choisit une longueur de paquet courte et, lorsque le nombre de données à transmettre est élevé, on utilise une longueur de paquet élevée.

11. Procédé selon l'une des revendications précédentes, **caractérisé en ce qu'**on utilise une métrique mémorisée qui indique quelle longueur de paquet est choisie dans quelle plage de valeurs de l'exigence de temps de latence et/ou de la largeur de bande disponible.

12. Procédé selon l'une des revendications précédentes, **caractérisé en ce qu'**on utilise une métrique mémorisée qui indique pour quelle exigence de temps de latence et quelle largeur de bande quelle longueur de paquet est choisie.

13. Procédé selon l'une des revendications précédentes, **caractérisé en ce que** les quatre longueurs de paquet prédéfinies sont 187 bits, 411 bits, 635 bits et 859 bits.

14. Procédé selon l'une quelconque des revendications précédentes, **caractérisé en ce que** le canal de données physique est actionné soit électriquement, soit optiquement.

15. Agencement de système pour la transmission de données par paquets sur jusqu'à 128 chemins de données virtuels via un canal de données physique d'une automobile avec un temps de latence déterministe, comprenant :

> - une unité d'interface aménagée pour lire (100) une consigne de temps de latence fournie et une consigne de largeur de bande du canal de données pour respectivement tous les chemins de données virtuels pour la transmission d'une séquence de bits à transmettre ;
> - une unité d'initialisation aménagée pour régler (102) une longueur de paquet pour chacun des 128 chemins de données en tenant compte de quatre longueurs de paquet prédéfinies de la séquence de bits, la longueur de paquet étant respectivement sélectionnée (101) au moyen d'une unité de sélection de telle sorte que, en cas de demande de temps de latence court et de faible largeur de bande disponible, des longueurs de paquet courtes sont utilisées et que, en cas de demande de temps de latence long et de largeur de bande disponible élevée, des longueurs de paquet longues sont sélectionnées.

16. Produit programme d'ordinateur comprenant des instructions qui, lorsque le programme est exécuté par au moins un ordinateur, amènent ce dernier à exécuter les étapes du procédé selon l'une quelconque des revendications 1 à 14.

17. Support de stockage lisible par ordinateur comprenant des instructions qui, lorsqu'elles sont exécutées par au moins un ordinateur, amènent celui-ci à exécuter les étapes du procédé selon l'une quelconque des revendications 1 à 14.

100 

101 

102 

Fig. 1

EP 4 236 256 B1

**Fig. 2**

| | | | |
|---|---|---|---|
| VP | 7 | Virtual Path Identifier | |
| SN | 3 | Running Serial Nr. | |
| CT | 2 | Cell Type | |
| HCRC | *10* | Header CRC | HD=5; max:21 Bit; p=0x2b9 |
| PI | 3 | Paload Info | |
| PL | 187 / 411 / 635/ 859 | Payload | |
| PCRC | *12* | Payload CRC | HD=4; max:2035 Bit; p=0x8f3 |

## Fig. 3

EP 4 236 256 B1

| L | B | P |
|---|---|---|
| - | - | 187 |
| - | + | 411 |
| + | - | 635 |
| + | + | 859 |

Fig. 4A

| L | B | P |
|---|---|---|
| - | - | 187 |
| + | - | 411 |
| - | + | 635 |
| + | + | 859 |

Fig. 4B

| | DATA | SYMBOL(S) | |
|---|---|---|---|
| 0 | 00000000000000 | 1111010000001011 | 0000101111110100 |
| 1 | 00000000000001 | 1111001000001101 | 0000110111110010 |
| 2 | 00000000000010 | 1111000100001110 | 0000111011110001 |
| ... | ... | | |
| ... | ... | | |
| 16381 | 11111111111101 | 1011110001000011 | 0100001110111100 |
| 16382 | 11111111111110 | 1011101101000100 | 0100010010111011 |
| 16383 | 11111111111111 | 1101110100100010 | 0010001011011101 |

Fig. 5

EP 4 236 256 B1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 9043509 B2
- EP 1993237 B1